# EUROPEAN PATENT APPLICATION

(11) **EP 3 096 273 A1**
(43) Date of publication of application: **23.11.2016**
(21) Application number: 16170632.0
(22) Date of filing: 20.05.2016
(51) Int. Cl.: G06Q 20/04, G06Q 20/18, G06Q 20/38, G07F 7/02, G07F 17/42, G07G 1/00

(54) **SYSTEM FOR THE SALE OF AN ARTICLE**

(30) Priority: 22.05.2015 SE 1550657
(71) Applicant: SmartShop Scandinavia AB, 14146 Huddinge (SE)
(72) Inventor: KÄNNGÅRD, Ove, 14631 Tullinge (SE)
(74) Representative: Bergenstråhle Group AB

(57) **Abstract**

Disclosed is a system for the sale of consumer goods. The system comprises selection means (10) adapted for enabling a customer to select an article to be purchased (20) and providing a first token (12) comprising a first code, the first token (12) representing the article to be purchased (20). The system further comprises payment means (14) adapted for reading the first token (12), detecting the first code, validating the first code, receiving a payment from the customer for the article to be purchased (20), providing the customer with a second token (16) comprising a second code, wherein the second token (16) represents the article to be purchased (20). The system further comprises checkout means (18) adapted for scanning the second token (16), detecting the second code, validating the second code, and providing the customer with the article to be purchased (20), wherein the checkout means (18) are adapted for validating the second code based on the structure of the second code.

## Description

### Technical field

The present disclosure relates to a system for the sale of articles, particularly but not exclusively for high value articles such as example tobacco sold in a supermarket.

### Background art

There are known systems for the sale of articles, i.e. vending systems, using of tokens in which a customer may select an article on a screen at a first place, receive a token, then pay for the token at a cashier and subsequently change to token for an article to be purchased.

One of the most common areas of usage for such systems is in supermarkets, especially for goods that is considered likely to be targeted by thieves, such as tobacco.

However, there are problems with existing such systems. They require a lot of setup in order to work, which is time-consuming and may result in a loss of profits during installment. Also, the systems are generally quite expensive, both to install and to maintain, which is relevant when deciding whether or not to use such systems, especially for smaller stores and supermarkets.

It would be beneficial to achieve systems for the sale of articles by use of tokens that are cheaper and easier to implement.

### Summary

It is an object of the solution to address at least some of the problems and issues outlined above. It is possible to achieve these objects and others by using systems as defined in the attached claims.

According to one aspect, there is provided a system for the sale of consumer goods. The system comprises selection means adapted for enabling a customer to select an article to be purchased and providing a first token comprising a first code, the first token representing the article to be purchased. The system further comprises payment means adapted for reading the first token, detecting the first code, validating the first code, receiving a payment from the customer for the article to be purchased and providing the customer with a second token comprising a second code, wherein the second token represents the article to be purchased. The system also comprises checkout means adapted for scanning the second token, detecting the second code, validating the second code and providing the customer with the article to be purchased, and wherein the checkout means are adapted for validating the second code based on the structure of the second code. By implementing such a system which bases the validation step of the structure of the second code, direct communication is not needed between the selection means, payment means and checkout means, which achieves a system which is cheaper to maintain and is less susceptible to interruptions.

In optional embodiments the second token may be in the form of a receipt, which is commonly used in most, if not all, systems for sale of consumer goods. The second code may further be information pertaining to the purchase, such as the name of the article, time of purchase, cashier number, transaction number, and other kinds of similar information. By basing the validation step on existing information, the system becomes easier to implement in existing systems, which is a big advantage compared to other systems which require a lot of new equipment and also a lot of time to install such equipment.

In other optional embodiments, the article to be purchased may comprise multiple articles, so that a customer may use a single token to receive multiple articles, which may be an advantage as it decreases the amount of paper used and the amount of different receipts to keep track of.

In another optional embodiment, the selection means may comprise a number of pre-printed tokens, for instance in the form of paper. The tokens may be pre-printed on other material as well, and by having pre-printed tokens a digital selection means is not needed, which may otherwise be the case.

In further optional embodiments, the first code may be automatically validated upon selection. Since the customer has not yet paid for the article when receiving the first token, it may not be needed to have a rigorous validation step.

Further, in some optional embodiments the steps of validating the codes, especially the second code, may be based on different ranges of information and/or different ranges of positions of the information. These ranges may be predetermined. By having such ranges available, it is possible to validate codes from multiple different payment means, which may facilitate implementation and running of such a system as described herein.

According to another aspect, there is also provided a method for the sale of consumer goods. The method comprises selecting an article to be and obtaining a first token comprising a first code, the first token representing the article to be purchased. The method further comprises scanning the first token and paying for the article to be purchased, detecting the first code, validating the first code and obtaining a second token comprising a second code, the second token representing the article to be purchased. The method further comprises scanning the second token, detecting the second code, validating the second code, and obtaining the article to be purchased, wherein the step of validating the second code is based on the structure of the code. By using a method such as described above, it is possible to achieve a more efficient way of selling consumer goods.

The above systems and methods may be configured and implemented according to other different optional embodiments. Further possible features and benefits of this solution will become apparent from the detailed description below.

### Short description of the drawings

The solution will now be briefly described, by way of example, with reference to the accompanying drawings.
Fig.1 shows a schematic overview of a system according to the present disclosure.
Fig. 2 shows the steps of the method according to the present disclosure.

### Description of embodiments

In the following, a detailed description of the different embodiments of the solution is disclosed with reference to the accompanying drawings. All examples herein should be seen as part of the general description and are therefore possible to combine in any way in general terms. Individual features of the various embodiments and methods may be combined or exchanged unless such combination or exchange is clearly contradictory to the overall function of the implementation.

Systems using tokens for the sale of articles are generally used for high value goods which is more likely to be targeted by thieves, such as tobacco. It would be beneficial if such systems were available at a price range that would make it feasible even for smaller stores to implement them. Furthermore, it would also be beneficial if such systems were easier and faster to setup and install than the existing systems, making it less disruptive in the day-to-day work for the businesses implementing them.

Shortly described, the present disclosure relates to a system for sale of an article by use of a token, for example the sale of tobacco products. The present disclosure is intended to provide a system which is cheaper and easier to implement and, partly by not requiring direct communication between the different parts of the system, thus solving at least some of the issues outlined above. The solution will now be described in more detail with reference to the accompanying drawings.

Throughout this document, the terms "article" and "article to be purchased" are used interchangeably. It should also be noted that even though these terms are in singular, they are intended to also encompass embodiments in which there are multiple articles represented on a first and/or second token, and in which the customer is provided with multiple articles from a single first and/or second token.

Furthermore, the present disclosure discusses various types of codes. The codes are intended to be readable/scannable, for instance by computer means. The types of codes used are necessarily relevant for this disclosure, as long as it is readable, and any type of code may be used, such as QR codes, EAN codes, electronic codes, virtual codes, text, symbols, or anything else having similar characteristics.

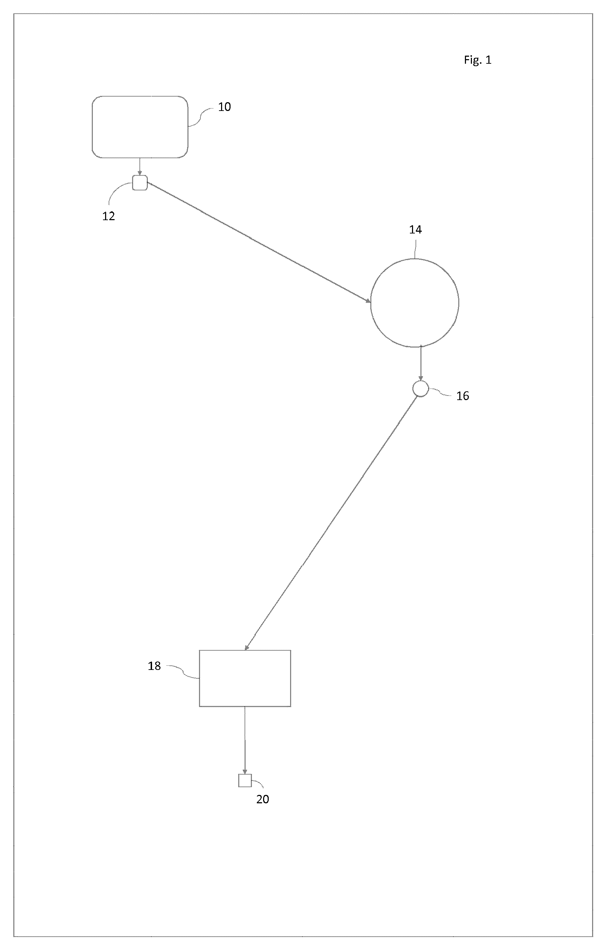

Fig. 1 shows a schematic overview of a system according to the present disclosure, comprising selection means 10 adapted for enabling a customer to select an article to be purchased 20 and providing a first token 12 comprising a first code, the first token representing the article to be purchased. The system further comprises payment and validation means 14 adapted for reading the first token, detecting a first code, validating the first code, receiving payment from the customer for the article to be purchased 20 and providing the customer with a second token 16 comprising a second code, the second token 16 representing the article to be purchased 20. The system also comprises checkout means 18 adapted for scanning the second token, detecting a second code, validating the second code, and providing the customer with the article to be purchased 20. The step of validating the first code and the step of validating the second code are based on the structure of the codes rather than on an authentication step based on direct communication between the different means.

The selection means 10 are typically in the form of an interactive display, for instance an LCD or plasma display or any type of typical computer screen. The display has an interface through which a customer may interact with the available assortment of articles to be purchased, for instance categorized into different groups of article types such as tobacco, razor blades and condoms. Typically the types of goods sold through a system according to the present disclosure are of higher value than average and also more likely to be targeted by thieves, which is why the additional security measures as compared to other articles may be required.

In some embodiments, the selection means may comprise multiple pre-generated notes and/or papers constituting first tokens, having codes thereon. For instance, there may be visual representations, such as images, in front of each stack of notes indicating different types of articles, and a customer may grab one of the notes and bring it to the payment means.

After a customer has selected an article to be purchased on the selection means 10, for instance by interacting with the display in the case of the selection means comprising a display, the selection means 10 are adapted to provide the customer with a first token 12 comprising a first code, wherein the token 12 represents the article to be purchased 20. The token 12 is typically in the form of a piece of paper having the first code printed thereon, such as a QR code or a EAN code. However, in some embodiments the code may not be visible to a user but possible to detect by reading means, such as a magnetic code. The token may also be in other forms than a piece of paper, for example a small object such as a coin or dice.

The token 12 may then be taken to the payment means 14. Typically the customer transports the token 12 from the selection means 10 to the payment means 14, but in some embodiments this transportation may also be automatically performed by the system. The payment means 14 are adapted to be able to read the token, detect the first code, validate the first code, receive payment from the customer and provide the customer with a second token comprising a second code, representing the article to be purchased. The second token is generally visually similar to the first token, i.e. typically a visually readable code on a piece of paper, with the difference that the code being comprised in the second token is different from the first code comprised in the first token. The tokens are not necessarily visually distinguishable from one another, but they are distinguishable when scanned by a computer.

In some embodiments the selection of an article and providing the customer with a first token may be performed virtually as well as physically, which is generally true for this disclosure, if it is not apparently contradictory to the overall function of the herein described systems and methods. For example, the customer may select an article in an online interface, then be provided with a virtual token representing the article. The virtual token may then be presented to a physical or virtual

The payment means comprises means for the customer to interact with it, typically in the form of a display, similar to the selection means 10. The customer may present the first token 12 to the payment means 14 in order to for the payment means 14 to scan the code and provide a second, validated token, after the customer provides payment. The payment means 14 are adapted to be able to read the code of the first token 12. Typically, the payment means comprises a scanner adapted for reading the second code, such as a QR reader for reading a QR code. After the customer has presented the first token 12 to the payment means 14, the payment means reads the code of the first token to detect which article the customer wishes to purchase, validates the code to confirm that it corresponds to the correct article 20, and then the customer pays for the article. After receiving payment from the customer, the payment means 14 may then provide the customer with a second, validated, token 16 comprising a second code. In some embodiments, in order to facilitate implementation, the first code is automatically validated upon detection, basically resulting in that no validation step is needed. It may be preferable to avoid unnecessary steps since the customer has still not paid anything when validating the first token.

Typically, the payment means 14 are completely automated, meaning that the customer is responsible for scanning the first token 12, providing payment and taking the second token 16 when it is provided by the payment means 14. However, in some embodiments it is possible for some or all functionalities to be manually controlled. For example, this could entail having an employee working at the payment means 14 who is responsible for reading the code of the first token 12, manually entering the code into the payment means 14 to see which article the token corresponds to, manually accepting payment from the customer, and providing the customer with the second token 16 after it is generated by the payment means 14. It is also possible to combine the manual and automatic aspects described above, which is typically the case for this disclosure if not explicitly stated otherwise.

In some embodiments, the payment may be performed in various ways. For instance, the customer may have a pre-existing account related to the payment means, and the step of payment may comprise the payment means deducting the price of the article for an existing balance. In other cases, the article may be free and not require a payment step. Furthermore, it is also possible that the customer performs the payment over a related channel, and provides confirmation of a payment rather than actual payment to the payment means.

After being provided with the second token 16, the customer may proceed to the checkout means 18 to exchange the second token 16 for the article to be purchased 20. The checkout means 18 are adapted for reading the second token, detecting the second code, validating the second code, and providing the customer with the article 20.

The second token 16 comprises a second code, representing the article to be purchased. A difference between the first token 12 and the second token 16 is that the customer has provided payment for the article to be purchased 20 before receiving the second token 16 comprising the second code. The checkout means 18 are adapted to read the second code on the second token 16, similar to how the payment means 14 are adapted to read the first code on the first token 12. The checkout means 18 are further adapted to validate the second token 16, in order to ensure that the article 20 has been paid for by the customer, before the checkout means 18 provides the article 20 to the customer. In a typical implementation, the checkout means 18 may comprise a machine similar to a vending machine, which contains various articles of different kinds, and may provide the article to the customer upon reading the second code and detecting that it is valid. In other embodiments, the checkout means may comprise a cashier with a human employee manually validating the second code by entering it into a computer system and comparing it with a database of acceptable codes, and then the employee may manually provide the article 20 to the customer upon determining that the second code was valid.

In some embodiments, the second token may comprise a receipt with text thereon describing the purchase. The second code may comprise commonly used text on a receipt, such as for example one or more of: the name(s) of the article(s), the date of the purchase, the time of the purchase, the number of the cashier, the number of the warehouse, the transaction number of the purchase, the name of the checkout assistant, the receipt number, the cost of the purchase, the amount of items, address information, business registration number, or any other similar information. The second token may comprise a second code added to the token for the sake of providing a code, or the second code may be comprised of information already used on receipts. By making it possible to validate the second token based on receipt information, a system as described herein may be implemented more easily into existing systems without requiring the addition of additional information into the systems. It may also be possible to validate the second token based on ranges of information rather than very specific information, for example the value for cashier number may between two numbers, so that transactions from all cashiers in a warehouse may be accepted in the same checkout means.

The step of validating the second token offers one of the key advantages with the present solution. According to the system and method presented in this disclosure, the selection means 10, payment means 14 and checkout means 18 do not need to be in direct communication with one another in order for the system to work, as is the case with most existing systems for sale of high-value articles. This is possible by the validation step being based on the structure of the second code rather than on an authentication step which requires communication between the payment means 14 and the checkout means 18. Typically, this may be solved by the payment means 14 being adapted to provide codes with a specific structure, and the checkout means 18 being similarly adapted to recognize codes with that specific structure, wherein the structure is unique for each pair of payment means 14 and checkout means 18. It is also possible for all payment means 14 generating similar codes for similar articles, and all checkout means being able to read all codes from similar systems, although this solution may be considered weaker from a security perspective since an article purchased at the payment means 14 in one store may be collected at the checkout means 18 of a different store with the same systems. Combinations of the alternatives above are also possible, for example all the checkout means 18 in one store may be adapted to read all the codes from tokens generated by different payment means 14 in the same store.

The structure of valid codes is typically pre-programmed into each payment means 14 and each checkout means 18, in some embodiments uniquely for each pair and in some embodiments in one way for all similar systems. The code or codes may comprise a set number of characters, with a certain range of possible characters being allowed on each position. In other embodiments, the codes may comprise a variable number of characters, varying depending on the types of articles that are to be purchased. An example of how the codes may be structured are as follows: Each code for a specific system has 6 characters. The first character must be one of the letters A, G or K. The second character must be a number between 3 and 6. The third character must one of !, # and ¤. The fourth character must be an even number between 2 and 8. The fifth character must be the subsequent letter of the alphabet as compared to the first character, i.e. B, H or J. The sixth character must be the fourth character subtracted by 1, i.e. between 1 and 7.

In embodiments where the second token comprises a receipt and the second code comprises text used on the receipt, the structure of the second code may for example be where on the receipt information is positioned, such as information regarding the time and date of the sale and the name of the article. The step of validating the second code may comprise checking that the time and date of the receipt is not later than the time of validating the second code, and/or that the time and date of the receipt is within a predefined period of time, such as within the last hour or last week. A lot of other kinds of information other than time and date may be used for validating the second code, as mentioned previously, and in some embodiments it may only depend on finding the information, in other embodiments the validation may depend on finding certain information at a certain position. It is not necessarily exactly matched information or exactly matched positions that is used, in some embodiments there may be acceptable ranges of information and position, wherein the information may be any kind of information commonly used in receipts, as described above.

The example above may be the structure of all codes for a specific type of article. It may be the structure of all codes for a certain article. It may also be the structure of all codes in the system, with the variations between characters being what differentiates different articles from one another.

Typically the tokens of the present disclosure are physical tokens in the form of a code on a piece of paper, such as a QR code or an EAN code. However, in some embodiments the tokens may also be virtual and comprised in a mobile device of the customer, such as a smartphone. In other words, the tokens may be virtual as well as physical, as long as they comprise a code which is readable by the checkout means 18 and/or the payment means 14. It is also possible to incorporate one or several of the functions of the systems into a partially web-based solution for the sale of articles to be purchased.

For example, a customer may choose an article to be purchased 20 in a specific store on a mobile device, such as a smartphone, and be provided with a first token which is then readable by payment means 14 in that store. It may further be possible for the customer to also pay for the article 20 online, and instead being provided with a second validated token 16, such as a QR code, shown in the mobile device. The customer may then take the second token 16 to a checkout means 18 related to the specific store, present the second token 16 and receive the article 20 upon the checkout means 18 reading the code and verifying that it has the right structure.

The architecture of the system described in this disclosure may comprise computer means as described herein. The selection means, payment means and checkout means may all comprise various types of computers and may further comprise databases. The different means may also be connected to databases which are located elsewhere, such as a central database covering a warehouse of a chain of warehouses. In some embodiments the means may comprise mobile devices such as smartphones and tablets, having the required functionalities thereon. It is also possible, as described in this disclosure to implement a system in which some of the means are digital and/or electronic, while other means, such as the selection means, may require no electronic functionality. It is also possible to combine these different means, as will be understood by a person skilled in the art.

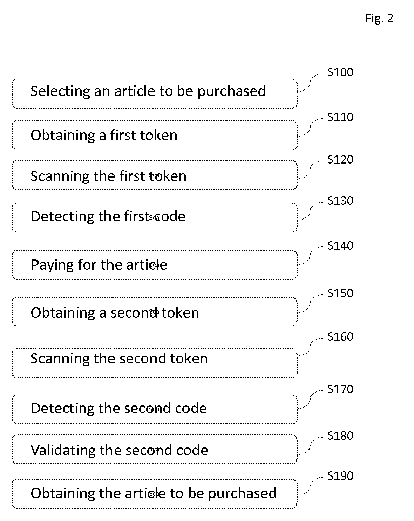

Looking now at Fig. 2, there is also provided a method for the sale of articles to be purchased. The steps of the method are to select and article to be purchased, providing a first token comprising a first code, reading the first token, detecting the first code, validating the first code, paying for the article, providing a second token comprising a second code, reading the second token, detecting the second code, validating the second code and providing the article to be purchased.

As discussed above, it is possible for one or multiple steps to be incorporated into a web-based solution for the sale of articles, and it is possible for all steps to be incorporated into a physical system for the sale of articles.

The step of selecting S100 an article to be purchased may be performed on a mobile device belonging to a customer, or it may be performed on a selection means 10. The selection step S100 comprises the customer selecting the article, typically by indicating on a display which article is to be purchased. This may for instance be done by typing the name of the wanted article, or by clicking on the article in a list with available articles.

After selecting S100 the article, the customer obtains S110 a first token comprising a first code, the token representing the article to be purchased. In the case of a display in a store, the customer is typically provided with a piece of paper with a code printed thereon, provided by printing means comprised in the selection means. In the case of the customer selecting an article on a mobile device, the customer may be provided with a virtual code, such as a QR code which is readable by a QR reader, or the customer may be provided with a code comprising characters which may be manually entered into the payment means.

After obtaining S110 the first token, the customer may present the first token to means adapted to read the code comprised in the first token. These means may for instance be provided at the cashier of a store. Typically this entails the customer scanning S120 the token, for instance by use of an infrared reader for detecting an EAN code. In some embodiments, the scanning step S120 may comprise the customer manually entering the first code of the first token. After the code has been scanned S120, the code is detected S130 in order to ensure that it corresponds to the correct article. In some embodiments the detection step further comprises the customer confirming that the first token corresponds to the article the customer intends to purchase, i.e. a validation step.

When it has been ensured that the customer has selected the wanted article, the customer may pay S140 for the article, for instance at the cashier of a store. Payment may be done with any means commonly used for payment, such as for instance credit cards, vouchers or cash. After paying S140 for the article, the customer obtains S150 a second token, which has been validated in the sense that the customer has already paid for the article to be purchased upon receipt of the second token comprising a second code.

The second token may then be scanned S160, similarly to how the first code is scanned. For instance, the customer may provide the second token to scanning means adapted to read the code, detect the code and validate the code. The step of validating the code becomes increasingly important with the second token as compared to the first token, which typically does not need to be validated, since the customer has already paid for the article when obtaining the second token, but has not paid for the article when obtaining the first token. When scanning S160 the second token, it is determined if the code has a correct structure by detecting S170 the second code and subsequently validating S180 the second code. This step generally entails checking if the second code has a structure which matches a predetermined structure. It is not necessarily so that the code must have a set of specific information, but rather that the information on certain positions must be of a specific kind and within a predetermined range, such as described previously in this disclosure.

If it is determined in the validation step S180 that the second code comprises a structure of the correct kind, the customer may obtain S190 the article. In some embodiments, this entails the customer picking the article up at a separate location, for example in the case of large articles, or it may entail the customer being provided with the article at a vending machine connected to the means for scanning and validating the second code.

It should be understood that the examples presented herein are not intended to be limiting, but rather provide illustration of the inventive concept of the present disclosure.

## Claims

1. A system for the sale of consumer goods, comprising:
computerized selection means (10) adapted for enabling a customer to select an article to be purchased (20) and providing a first token (12) comprising a first code, the first token (12) representing the article to be purchased (20);
computerized payment means (14) adapted for:
reading the first token (12);
detecting the first code;
validating the first code;
receiving a payment from the customer for the article to be purchased (20),
providing the customer with a second token (16) comprising a second code, the second token (16) representing the article to be purchased (20), and
computerized checkout means (18) adapted for:
scanning the second token (16);
detecting the second code;
validating the second code, and
providing the customer with the article to be purchased (20),
**characterized in that**
the selection means (10), payment means (14) and checkout means (18) are not in direct communication, and **in that** the checkout means (18) are adapted for validating the second code based on the structure of the second code.

2. The system according to claim 1, wherein the second token is a receipt.

3. The system according to any one of claims 1 or 2, wherein the second code is information pertaining to the purchase.

4. The system according to any one of claims 1 to 3, wherein the article to be purchased comprises multiple articles.

5. The system according to any one of claims 1 to 4, wherein the selection means comprises a number of pre-printed papers with tokens thereon.

6. The system according to any one of claims 1 to 5, wherein the first code is automatically validated upon detection.

7. The system according to any one of claims 1 to 6, wherein the step of validating the second code is based on different ranges of information.

8. The system according to any one of claims 1 to 7, wherein the step of validating the second code is based on the position of the second code, the position being within a predetermined range.

9. The system according to claim 7 or 8, wherein the ranges of information and positions are predetermined.

10. A method for the sale of consumer goods to a customer, comprising:
selecting an article to be purchased (20) at a selection means and obtaining a first token (12) comprising a first code, the first token (12) representing the article to be purchased (20);
scanning the first token (12) at a payment means and paying for the article to be purchased (20), detecting the first code, validating the first code and obtaining a second token (16) comprising a second code, the second token (16) representing the article to be purchased (20);
scanning the second token (16) at a checkout means, detecting the second code, validating the second code, and obtaining the article to be purchased (20),
**characterized in that**
the selection means (10), payment means (14) and checkout means (18) are not in direct communication, and **in that** the step of validating the second code is based on the structure of the code.
